# EUROPÄISCHE PATENTSCHRIFT

(11) **EP 3 552 259 B1**
(45) Veröffentlichungstag und Bekanntmachung des Hinweises auf die Patenterteilung: **06.01.2021**
(21) Anmeldenummer: 17803877.4
(22) Anmeldetag: 16.11.2017
(51) Int. Cl.: H01M 2/10, H01M 2/20, H01M 10/6556, H01M 10/613

(54) **SPEICHERANORDNUNG**
ACCUMULATOR ARRANGEMENT
SYSTÈME DE STOCKAGE

(30) Priorität: 07.12.2016 DE 102016224318
(43) Veröffentlichungstag der Anmeldung: 16.10.2019
(73) Patentinhaber: Audi AG, 85045 Ingolstadt (DE)
(72) Erfinder: THURMEIER, Markus, 84166 Adlkofen (DE); SCHÜSSLER, Martin, 85092 Kösching (DE); BAHR, Markus, 85053 Ingolstadt (DE); SCHMIDT, Stephan, 86673 Bergheim (DE)
(86) Internationale Anmeldenummer: PCT/EP2017/079472
(87) Internationale Veröffentlichungsnummer: WO 2018/104023

(56) Entgegenhaltungen:
- WO-A1-2012/105643
- JP-A- H1 167 178
- JP-A- 2007 048 637
- US-A1- 2009 111 015
- US-A1- 2012 270 087

## Beschreibung

Die Erfindung betrifft eine Speicheranordnung umfassend mehrere separate Speichereinrichtungen zum Speichern von elektrischer Energie.

Speichereinrichtungen für elektrische Energie stellen eine maßgebliche Komponente von Kraftfahrzeugen mit elektrischem Antrieb dar, die sowohl den Nutzwert der Kraftfahrzeuge beeinflussen als auch einen signifikanten Anteil der Herstellungskosten ausmachen. Zum Beispiel wird die Reichweite des Kraftfahrzeugs unter anderem durch die Kapazität der Speichereinrichtung und das Gewicht des Fahrzeuges bestimmt. In heutigen Fahrzeugen werden die einzelnen Speichereinrichtungen einer Speicheranordnung meist in einem großen Gehäuse untergebracht. Dieses Gehäuse übernimmt dabei beispielsweise die Funktion des Schutzes der Speichereinrichtungen vor Umwelteinflüssen und gewährt deren mechanische Stabilität. Das Gehäuse muss dabei so ausgeführt sein, dass es auch in Situationen, bei denen hohe mechanische Belastungen auftreten (z. B. Unfälle) eine hinreichende mechanische Stabilität behält. Gleichzeitig wird aber die oben genannte Reichweite durch große Gehäusegewichte negativ beeinflusst. Auch kann die Größe der Gehäuse nicht flexibel auf die Größe der Speicheranordnungen angepasst werden, so dass für jede Speicheranordnung unterschiedlicher Größe ein entsprechendes Gehäuse verwendet werden muss, was zu höheren Kosten in der Herstellung der Speicheranordnungen führt.

Der Erfindung liegt daher die Aufgabe zugrunde, eine Speicheranordnung aus separaten Speichereinrichtungen anzugeben, die den Verzicht auf ein externes Gehäusebauteil ermöglicht.

Zur Lösung dieses Problems wird eine Speicheranordnung gemäß Anspruch 1 bereitgestellt.

Die separaten Speichereinrichtungen, die z. B. als Akkumulatorzellen oder als Verbünde von Akkumulatorzellen ausgeführt sein können, verfügen somit jede über ein eigenes, in sich stabiles Einrichtungsgehäuse. Um die geforderte mechanische Stabilität der gesamten Anordnung zu erreichen, sind die separaten Einrichtungsgehäuse untereinander zur Bildung eines festen Verbundes verbunden. Abhängig von der Anzahl der verwendeten Einrichtungsgehäuse lassen sich somit Verbünde beliebiger Größe herstellen. Gegenüber dem Stand der Technik bietet die erfindungsgemäße Lösung den Vorteil, dass auf ein weiteres, die gesamte Speicheranordnung beinhaltendes Gehäuse verzichtet werden kann ohne dass Einbußen bei der mechanischen Stabilität gemacht werden müssen. Der Wegfall dieses Gehäuses führt außerdem zu einer Verringerung sowohl des Gewichts als auch der Herstellungskosten der Speichereinrichtung.

Die stangenförmigen Hohlprofile können als Strangpressprofile, bevorzugt aus Aluminium oder aus Kunststoff, gefertigt werden. Die Verwendung von Strangpressprofilen ermöglicht hierbei eine kostengünstige Herstellung, wohingegen die Verwendung von Leichtbaumaterialien, wie Aluminium oder Kunststoff, zu einer Reduktion des Gesamtgewichts führt. Um die geforderte mechanische Stabilität zu gewährleisten, müssen die Hohlprofile eine hinreichende Wandstärke, beispielsweise 2 mm bis 5 mm, aufweisen.

Dabei können die verwendeten Hohlprofile kreisförmig, dreieckig, viereckig sechseckig, C-förmig oder U-förmig im Querschnitt sein. Abhängig von der gewählten Querschnittsform oder von der gewählten Kombination verschiedener Querschnittsformen sind verschieden angeordnete Verbünde von Speichereinrichtungen realisierbar. Die einzelnen Hohlprofile können dabei sowohl nebeneinander in waagerechter Richtung angeordnet werden, als auch übereinander gestapelt werden. Dies ermöglicht die Gestaltung von Verbünden, die geometrisch an den zur Verfügung stehenden Platz im Kraftfahrzeug angepasst werden können. Die einzelnen Hohlprofile eines Verbundes können über verschiedene Längen verfügen oder angeschrägte Enden aufweisen, um eine bestmögliche Anpassung der Speicheranordnung an die jeweilige Einbausituation und an den dabei zur Verfügung stehenden Bauraum zu erreichen.

Weiterhin können die Hohlprofile eines Verbundes stoffschlüssig und/oder durch seitliche Verbindungsmittel formschlüssig miteinander verbunden werden. Beispielsweise können die Hohlprofile mit ihren jeweiligen Nachbarn verschweißt werden und/oder durch seitliche Verbindungsmittel, wie beispielsweise eine Schwalbenschwanzverbindung oder durch Nut und Feder, formschlüssig mit diesen verbunden werden. Dabei ist es einerseits möglich, dass die Hohlprofile selbst über sowohl Nute als auch Federn verfügen oder andererseits, dass die Hohlprofile nur über Nute verfügen und ihre Verbindung über zusätzliche Federn erfolgt. Dies ermöglicht den festen Zusammenhalt des Verbundes in horizontaler wie in vertikaler Richtung und gewährt mechanische Stabilität.

Auch können die Hohlprofile wandseitig wenigstens einen Kühlmittelkanal aufweisen. Diese Kühlmittelkanäle können beispielsweise an einen Kühlwasserkreislauf angeschlossen werden, wodurch beim Betrieb der Speicheranordnung anfallende Wärme abgeführt werden kann. Die wandseitige Anordnung der Kühlmittelkanäle bietet gegenüber externen Kühlmittelkanälen den Vorteil eines geringeren thermischen Übergangswiderstandes und ermöglicht eine effiziente Kühlung der einzelnen Speichereinrichtungen. Die Kühlmittelkanäle können bei Herstellung der Hohlprofile als Strangpressprofile in einfacher Weise direkt mitgefertigt werden. Alternativ dazu kann die gesamte Speicheranordnung auf ein extern verlaufendes Kühlsystem aufgebracht werden.

Außerdem kann die jeweilige Speichereinrichtung an einem Einschubbauteil angeordnet sein, über das sie in ein Hohlprofil einführbar oder eingeführt ist. Dies bildet den Vorteil, dass jede Speichereinrichtung nach der stoffschlüssigen oder formschlüssigen Verbindung der Hohlprofile eingesetzt werden kann. Ferner ist es auch möglich, dass mithilfe der Einschubbauteile die Speichereinrichtung nachträglich wieder entfernt und z. B. im Falle eines Defekts ausgetauscht werden kann. Je nach Länge des Einschubbauteils und Länge des Hohlprofils ist es auch möglich, dass von beiden Seiten je ein Einschubbauteil in ein Hohlprofil eingeführt wird. Ferner können die Einschubbauteile so ausgeführt werden, dass sie an den Stirnseiten der Hohlprofile befestigt werden können, z. B. durch die Verwendung von einer oder mehrerer Schrauben.

Zusätzlich kann jedes Einschubbauteil wenigstens eine Stirnplatte aufweisen, die im eingeschobenen Zustand das Hohlprofil verschließt. Dies bietet den Vorteil, dass bei Verwendung eines Einschubbauteils pro Hohlprofil ein oder beide Enden des Hohlprofils derart verschlossen werden können, dass das Innere des Hohlprofils, bzw. die sich dort befindenden Speichereinrichtungen vor äußeren Umwelteinflüssen, wie z. B. eindringender Feuchtigkeit, geschützt sind.

Die Erfindung kann weiterhin so ausgestaltet werden, dass die Einschubbauteile als Schlitten, vorzugsweise aus Aluminium oder aus Kunststoff, ausgeführt sind. Die Ausführung als Schlitten bietet hierbei den Vorteil einer vergleichsweise einfachen Konstruktion der Einschubbauteile. Auch hier trägt die Verwendung von Leichtbaumaterialien, wie z. B. Aluminium, zu einem insgesamt geringen Gesamtgewicht der Gesamtkonstruktion bei. Es ist möglich, die Schlitten und/oder die Innenwände der Hohlprofile mit entsprechenden Führungsstrukturen auszustatten, so dass ein Einführen bzw. ein Entnehmen der Einschubbauteile möglichst einfach gestaltet und ein Verkanten möglichst vermieden wird. Neben der Ausführung als gleitende Schlitten sind auch weitere Ausführungsformen der Einschubbauteile denkbar, z. B. können die Einschubbauteile als Gleitkufen, beispielsweise aus Aluminium oder Kunststoff, ausgeführt werden. Zusätzlich können die Einschubbauteile mit Elementen versehen werden, die ihr Einführen bzw. Entnehmen weiter vereinfachen, wie z. B. Räder oder Rollen.

Eine Möglichkeit, die einzelnen Speichereinrichtungen untereinander elektrisch zu verbinden, besteht darin, dass die Speichereinrichtung über die Einschubbauteile elektrisch miteinander verbindbar oder verbunden sind. Dies bietet den Vorteil eines vergleichsweise einfachen Montageprozesses, da nach dem Einführen der Einschubbauteile keine weiteren elektrischen Verbindungen mehr vorgenommen werden müssen. Eine elektrische Verbindung über die Einschubbauteile kann beispielsweise über an ihrer Stirnfläche angebrachte Kontaktflächen erfolgen. Dabei sind die Kontaktflächen eines Einschubbauteils so ausgeführt, dass sie sowohl die an diesem Einschubbauteil angeordnete Speichereinrichtung kontaktieren als auch einen elektrischen Kontakt zu einer weiteren, benachbarten Speichereinrichtung herstellen. Dies erlaubt es, alle Speichereinrichtungen eines Verbundes miteinander elektrisch zu verbinden.

Eine andere Möglichkeit der Kontaktierung sieht vor, dass die Speichereinrichtungen über separate Verbindungsmittel elektrisch miteinander verbindbar oder verbunden sind. Hierbei können die Verbindungen beispielsweise über Kabel erfolgen. Vorteilhaft hierbei ist, dass die Speichereinrichtungen über eine Stirnseite der Hohlprofile in einfacher Weise mit beliebigen anderen Speichereinrichtungen desselben Verbundes verbunden und/oder an weitere Komponenten des Kraftfahrzeuges angeschlossen werden können.

Eine dritte Möglichkeit zur Kontaktierung kann dadurch realisiert werden, dass die Speichereinrichtungen über wenigstens eine Kontaktschiene elektrisch miteinander verbindbar oder verbunden sind, wobei die Kontaktschiene mehrere Stirnseiten der Hohlprofile abdeckt. Der Vorteil dieser Ausgestaltung liegt darin, dass die Kontaktschiene so ausgeführt werden kann, dass sie neben der elektrischen Verschaltung der Speichereinrichtungen auch die Stirnseiten der Hohlprofile verschließt. Dabei kann der Verschluss der Hohlprofile so gestaltet werden, dass das Innere der Hohlprofile, bzw. die dort befindlichen Speichereinrichtungen, vor äußeren Einflüssen, wie z. B. dem Eindringen von Feuchtigkeit, geschützt sind. Die elektrische Kontaktierung der Speichereinrichtungen kann dabei dadurch realisiert werden, dass die Kontaktschiene an ihrer nach innen gerichteten Seite beispielsweise federnd gelagerte Kontakte aufweist, die bei aufgesetzter Kontaktschiene eine elektrische Verbindung zu entsprechenden Kontaktflächen an den der Kontaktschiene zugewandten Seiten der Speichereinrichtungen herstellen. Die aufgesetzte Kontaktschiene kann mittels Schrauben oder eines Rastmechanismus an den Hohlprofilen befestigt werden.

Zur Erhöhung der Stabilität der Speicheranordnung ist vorgesehen, dass der Verbund aus Hohlprofilen in einen Rahmen eingefasst ist. Dabei können die Streben des Rahmens als insbesondere aus Aluminium oder Kunststoff bestehende Strangpressprofile gefertigt werden. Die Streben des Rahmens können entsprechend der äußeren Form des Verbundes ausgeführt und so aneinander befestigt werden, dass sie den Verbund fest umschließen. Die Streben sind so angeordnet, dass wenigstens zwei gegenüberliegende Streben des Rahmens parallel zu den Stirnflächen der umschlossenen Hohlprofile verlaufen. Die Spalte zwischen dem Rahmen und dem vom ihm umfassten Verbund aus Hohlprofilen können dabei zusätzlich mit am Rahmen und/oder am Verbund befestigten Blechen, beispielsweise zur Bildung eines faradayschen Käfigs, abgedeckt werden.

Weitere Vorteile und Einzelheiten der Erfindung ergeben sich aus den im Folgenden beschriebenen Ausführungsbeispielen sowie anhand der Zeichnungen.

Es zeigen:
- Fig. 1: eine geschnittene Seitenansicht einer Speicheranordnung,
- Fig. 2: eine geschnittene Seitenansicht einer weiteren möglichen Speicheranordnung aus formschlüssig verbunden Hohlprofilen mit sechseckigem Querschnitt,
- Fig. 3: eine geschnittene Seitenansicht auf eine Speicheranordnung aus Hohlprofilen mit unterschiedlichen Querschnitten,
- Fig. 4: eine perspektivische Seitenansicht auf eine Speicheranordnung,
- Fig. 5: eine Seitenansicht auf eine Speicheranordnung mit einer über die Einschubelemente erzeugten elektrischen Verbindung der Speichereinrichtungen,
- Fig. 6: eine Draufsicht auf eine Speicheranordnung mit durch Verbindungsmittel verbundenen Speichereinrichtungen,
- Fig. 7: eine Draufsicht auf eine erfindungsgemäße Speicheranordnung mit über eine Kontaktschiene verbundenen und in einen Rahmen eingefassten Speichereinrichtungen und
- Fig. 8: eine Perspektivansicht einer Kontaktschiene zur Verbindung von zwei Speicherelementen.

Die durch die Anzahl der Hohlprofile bestimmten Größen der im Folgenden beispielhaft dargestellten Verbünde sind willkürlich gewählt. Abhängig von den technischen und räumlichen Anforderungen können entsprechende Verbünde in beliebiger Größe realisiert werden. Die folgenden Figuren sind allesamt reine Prinzipdarstellungen.

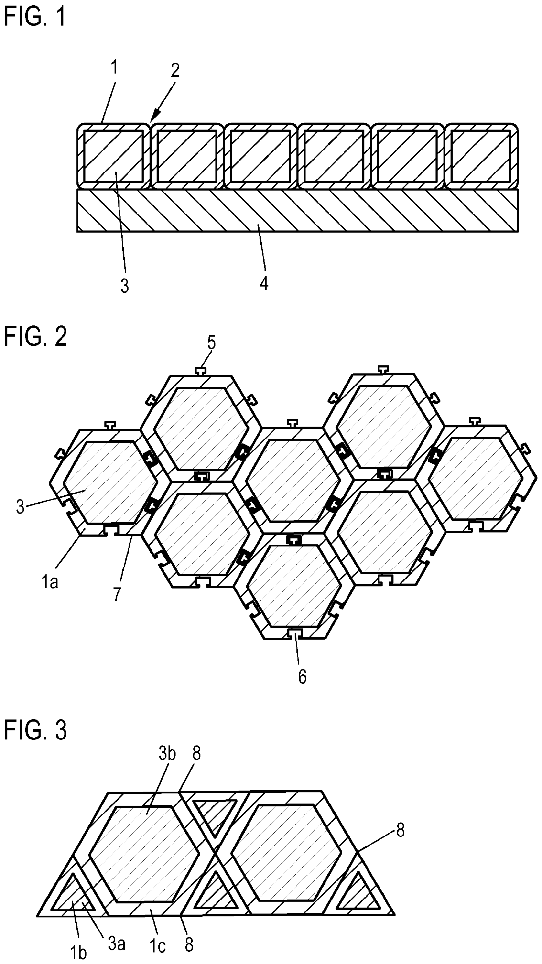

Fig. 1 zeigt als Schnittansicht eine Speicheranordnung bestehend aus sechs gleichartigen Hohlprofilen 1 mit rechteckigen Querschnitten. Die Hohlprofile sind dabei als Strangpressprofile aus Aluminium gefertigt, wobei ihre äußeren Ecken aufgrund des Herstellungsprozesses abgerundet sind. In den durch diese Abrundung entstehenden Spalten 2 sind die Hohlprofile miteinander durch punktförmige Schweißstellen oder eine durchgehende Schweißnaht verbunden. Im Inneren der Hohlprofile befinden sich entsprechend miteinander kontaktierten Speichereinrichtungen 3, welche beispielsweise als Lithium-Ionen-Akkumulatoren oder als Kondensatoren ausgeführt sein können. Der Verbund aus Hohlprofilen ist auf einem externen Kühlsystem 4 angebracht.

Fig. 2 zeigt eine geschnittene Seitenansicht eines Verbundes von Hohlprofilen 1a mit sechseckigem Querschnitt, die formschlüssig miteinander verbunden sind. Jedes einzelne Hohlprofil verfügt dabei über drei an den Seiten seiner oberen Hälfte ausgeprägte Federn 5 und dazu passende Nute 6 an den Seiten seiner unteren Hälfte, sodass beliebige große, formschlüssig verbundene Verbünde aus gleich ausgeprägten Hohlprofilen 1a gebildet werden können. Zusätzlich zu dieser formschlüssigen Verbindung können die Hohlprofile an den Kanten ihrer Kontaktflächen 7 verschweißt werden. Im Inneren der Hohlprofile befinden sich die Speichereinrichtungen 3. Die Nute 6 und Federn 5 können bei einer Ausführung der Hohlprofile 1a als Strangpressprofile aus Aluminium im Herstellungsverfahren der Strangpressprofile ausgeprägt werden.

Fig. 3 zeigt eine geschnittene Seitenansicht einer weiteren Speicheranordnung, wobei die Hohlprofile 1b einen dreieckigen Querschnitt und die Hohlprofile 1c einen sechseckigen Querschnitt aufweisen. Die Verbindung der einzelnen Hohlprofile 1b und 1c erfolgt in diesem Beispiel über an den Kanten 8 der Seitenflächen angebrachte Schweißnähte. Die sich in den Hohlprofilen 1b befindlichen Speichereinrichtungen 3a verfügen über einen dreieckigen Querschnitt und die in den Hohlprofilen 1c befindlichen Speichereinrichtungen 3b über einen entsprechenden sechseckigen Querschnitt. Durch das Hinzufügen weiterer Hohlprofile 1b und/oder 1c kann der Verbund beliebig in waagerechter und senkrechter Richtung vergrößert werden. Abhängig von den verwendeten Querschnitten der Hohlprofile 1b und 1c sind eine beliebige Anzahl von Kombinationen und geometrischen Anordnungen der Hohlprofile 1b und 1c innerhalb eines Verbundes realisierbar.

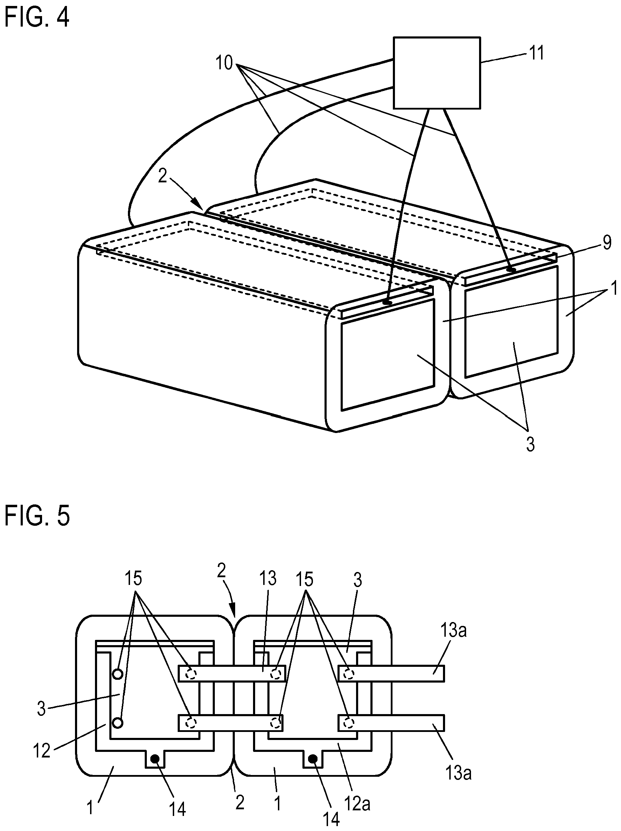

Fig. 4 zeigt eine perspektivische Seitenansicht einer Speicheranordnung aus zwei Hohlprofilen 1 die als Strangpressprofil aus Aluminium gefertigt sind. Beide Profile weisen je wenigstens einen wandseitigen Kühlmittelkanal 9 auf. Die beiden Profile sind über eine in den Spalten 2 verlaufende Schweißnaht miteinander verbunden. Die Kühlmittelkanäle 9 können über geeignete Kühlmittelschläuche 10, hier schematisch dargestellt, an ein externes Kühlmittelsystem 11, wie beispielsweise einen Kühlwasserkreislauf, angeschlossen werden. Für eine Kühlung der sich in den Hohlprofilen 1 befindlichen Speicherelemente 3 bietet sich auf diese Art ein geringer thermischer Übergangswiderstand.

Fig. 5 zeigt eine Seitenansicht zweier über eine an den Kanten 2 verlaufende Schweißnaht verbundene Hohlprofile 1. In diesen Hohlprofilen sind über die Einschubbauteile 12 und 12a die Speichereinrichtungen 3 eingeführt. Die Hohlprofile 1 sind als Strangpressprofile aus Aluminium ausgeführt. Die Einschubbauteile 12 und 12a sind als Schlitten aus Aluminium ausgeführt. Sie sind im eingeschobenen Zustand bewegungsfest im Innenraum der Hohlprofile 1 aufgenommen. Dies kann neben einer Klemmhalterung z. B. auch durch eine Rasthalterung erfolgen. Die Speichereinrichtungen 3 sind über die Kontaktflächen 13 des Einschubbauteils 12 miteinander elektrisch verbunden. Der Kontakt zwischen Kontaktflächen 13 und den Speichereinrichtungen 3 kann hierbei beispielsweise über an den Stirnflächen der Speichereinrichtungen 3 angebrachte Kontakte 15 erfolgen. Mit den Kontaktflächen 13a des Einschubbauteils 12a können die Speichereinrichtungen 3 in horizontaler Richtung mit weiteren Speicherelementen in einer größeren Anordnung verbunden werden. Durch eine entsprechende Anordnung weiterer, hier nicht gezeigter Kontaktflächen sind auch Kontakte zu in vertikaler Richtung angeordneten Speicherelementen eines größeren Verbundes möglich. Die aus einem elektrisch leitfähigen Material wie beispielsweise Kupfer bestehenden Kontaktflächen 13 und 13a sind hierbei so ausgeführt, dass sie die entsprechenden Speichereinrichtungen 3 in der für das Gesamtsystem der Speicheranordnung gewünschten Weise elektrisch verbinden. Dies könnte beispielsweise in einer Parallelschaltung von als Akkumulatoren oder Kondensatoren ausgeführten Speichereinrichtungen 3 bestehen. Über die Laschen 14 können die Einschubbauteile 12 und 12a an den Stirnseiten der Hohlprofile 1, beispielsweise über eine Schraube oder einen Rastmechanismus, befestigt werden, um ein ungewolltes Verrutschen der Einschubbauteile 12 und 12a zu verhindern und den elektrischen Kontakt zwischen den Speichereinrichtungen 3 zu gewährleisten.

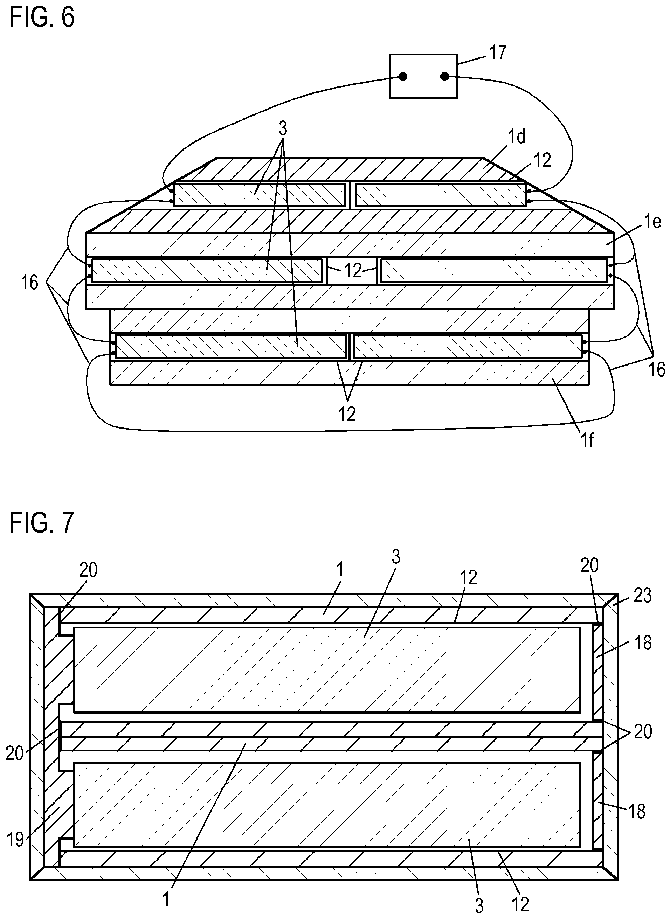

Fig. 6 zeigt eine Draufsicht auf eine Speicheranordnung aus drei Hohlprofilen 1d, 1e, 1f, wobei die Hohlprofile 1d, 1e, 1f als Strangpressprofile aus Aluminium ausgeführt sind. Die Ansicht ist parallel zur Zeichenebene geschnitten, um den Blick auf die sich in den Hohlprofilen 1d, 1e, 1f befindlichen Einschubbauteile 12 und die an ihnen angeordneten 3 freizugeben. Das Hohlprofil 1d weist hierbei angeschrägte Enden auf. Ferner sind die Längen der Hohlprofile 1e und 1f unterschiedlich. Die sich aus den Formen der Hohlprofile 1d, 1e, 1f ergebene Vielfalt der erfindungsgemäßen Verbünde erlaubt es, die äußere Form der Verbünde an den in der jeweiligen Einbausituation im Kraftfahrzeug zur Verfügung stehenden Platz anzupassen. In jedes Hohlprofil 1d, 1e, 1f wurden hierbei je zwei Einschubbauteile 12 mit jeweils einer Speicheranordnung 3 eingeführt. Die Speichereinrichtungen 3 sind über die Verbindungsmittel 16 in einer Weise untereinander elektrisch verbunden, die der gewünschten Funktion der gesamten Speicheranordnung entspricht. Wie bereits in Fig. 5 erläutert, könnte dies beispielsweise in einer Parallelschaltung von als Akkumulatoren oder Kondensatoren ausgeführten Speichereinrichtungen 3 bestehen. Über weitere Verbindungsmittel 15 ist auch ein Anschluss der gesamten Speicheranordnung an weitere Komponenten 17 des Kraftfahrzeugs möglich.

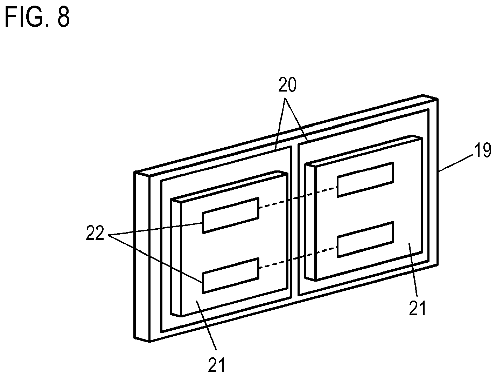

Fig. 7 zeigt eine Draufsicht auf eine erfindungsgemäße Speicheranordnung aus zwei Hohlprofilen 1. Die Ansicht ist parallel zur Zeichenebene geschnitten, um den Blick auf die sich in den Hohlprofilen 1 befindlichen Einschubbauteile 12 und die an ihnen angeordneten Speichereinrichtungen 3 freizugeben. Die Hohlprofile sind als Strangpressprofile aus Aluminium ausgeführt. Die als Schlitten aus Aluminium gefertigten Einschubbauteile 12 weisen an jeweils einem ihrer Enden je eine Stirnplatte 18 auf, mit der die Stirnfläche des Innenraums der Hohlprofile 1 bei eingeschobenen Einschubbauteilen 12 verschlossen sind. Die den Stirnplatten 18 gegenüberliegende Seite der Hohlprofile 1 ist durch eine Kontaktschiene 19 verschlossen, welche in Fig. 8 genauer beschrieben ist. Ein wasserdichter Verschluss des Innenraums der Hohlprofile 1 durch die Kontaktschiene 19 und die Stirnplatten 18 erfolgt durch den Einsatz entsprechender Dichtungen 20 an den Stirnplatten 18 und an Kontaktschiene 19. Die Speicheranordnung 1 wird seitlich von einem Rahmen 23 eingefasst, wobei zwei der Streben parallel zu den Stirnflächen der umfassten Hohlprofile verlaufen. Die Streben des Rahmens 23 können beispielsweise als im Querschnitt L-förmige Hohlprofile aus Aluminium oder Kunststoff ausgeführt sein. Zur Gewährung der mechanischen Stabilität des Rahmens 23 können die Streben an ihren hier als angeschrägt dargestellten Stirnflächen aneinander befestigt werden, beispielsweise durch hier nicht gezeigte Verschraubungen und/oder durch eine Formgebung, die das Eingehen von formschlüssigen Verbindungen zu benachbarten Streben erlaubt. Fig. 8 zeigt die Kontaktschiene 19 aus Fig. 7 in einer perspektivischen Ansicht. Die Dichtungen 20 ermöglichen einen wasserdichten Verschluss des Innenraums der von der Kontaktschiene verschlossenen Hohlprofile 1. Die Erhebungen 21 sind so ausgeführt, dass sie die Speicheranordnungen 3 wie in Fig. 7 gezeigt über die an der Kontaktschiene integrierten, aus einem elektrisch leitfähigen Material bestehenden Kontakte 22 elektrisch verbindet. Die Kontakte 22 sind, wie durch die gestrichelte Linie angedeutet, im Inneren der Kontaktschiene 19 verbunden. Im Falle einer aus mehreren Speicherelementen bestehenden Speicheranordnung können sowohl breitere und/oder längere Kontaktschienen mit einem entsprechenden Aufbau verwendet werden, oder mehrere separate Kontaktschienen zum Einsatz kommen. Die Kontaktschiene kann an ihrer Rückseite Kontaktierungsflächen für die Kontakte 22 aufweisen, um ihren Anschluss an andere Komponenten des Kraftfahrzeugs zu ermöglichen.

## Patentansprüche

1. Speicheranordnung umfassend mehrere separate Speichereinrichtungen (3) zum Speichern von elektrischer Energie, wobei jede Speichereinrichtung (3) in einem ein Einrichtungsgehäuse bildenden, stangenförmigen Hohlprofil (1) aufgenommen ist, wobei die Hohlprofile (1) zur Bildung eines festen Verbundes untereinander verbunden sind,
**dadurch gekennzeichnet,**
**dass** der Verbund aus Hohlprofilen (1) in einem Rahmen (23) eingefasst ist, wobei wenigstens zwei gegenüberliegende Streben des Rahmens (23) parallel zu den Stirnflächen der umschlossenen Hohlprofile (1) verlaufen.

2. Speicheranordnung nach Anspruch 1,
**dadurch gekennzeichnet,**
**dass** die stangenförmigen Hohlprofile (1) als Strangpressprofile gefertigt sind.

3. Speicheranordnung nach einem der vorangegangenen Ansprüche,
**dadurch gekennzeichnet,**
**dass** die Hohlprofile (1) kreisförmig, dreieckig, viereckig, sechseckig, C-förmig oder U-förmig im Querschnitt sind.

4. Speicheranordnung nach einem der vorangegangenen Ansprüche,
**dadurch gekennzeichnet,**
**dass** die Hohlprofile (1) stoffschlüssig und/oder durch seitliche Verbindungsmittel formschlüssig miteinander verbunden sind.

5. Speicheranordnung nach einem der vorangegangenen Ansprüche,
**dadurch gekennzeichnet,**
**dass** die Hohlprofile (1) wandseitig wenigstens einen Kühlmittelkanal (9) aufweisen.

6. Speicheranordnung nach einem der vorangegangenen Ansprüche,
**dadurch gekennzeichnet,**
**dass** jede Speichereinrichtung (3) an einem Einschubbauteil (12) angeordnet ist, über das sie in ein Hohlprofil (1) einführbar oder eingeführt ist.

7. Speicheranordnung nach Anspruch 6,
**dadurch gekennzeichnet,**
**dass** das Einschubbauteil (12) wenigstes eine Stirnplatte (18) aufweist, die im eingeschobenen Zustand das Hohlprofil (1) verschließt.

8. Speicheranordnung nach Anspruch 6 oder 7,
**dadurch gekennzeichnet,**
**dass** die Einschubbauteile (12) als Schlitten oder als Gleitkufen ausgeführt sind.

9. Speicheranordnung nach einem der Ansprüche 6 bis 8,
**dadurch gekennzeichnet,**
**dass** die Speichereinrichtungen (3) über die Einschubbauteile (12) elektrisch miteinander verbindbar oder verbunden sind.

10. Speicheranordnung nach einem der Ansprüche 1 bis 8,
**dadurch gekennzeichnet,**
**dass** die Speichereinrichtungen (3) über separate Verbindungsmittel (16) elektrisch miteinander verbindbar oder verbunden sind.

11. Speicheranordnung nach einem der Ansprüche 1 bis 8,
**dadurch gekennzeichnet,**
**dass** die Speichereinrichtungen (3) über wenigstens eine Kontaktschiene (19) elektrisch miteinander verbindbar oder verbunden sind, wobei die Kontaktschiene (19) wenigstens eine Stirnseite eines Hohlprofils (1) abdeckt.

## Claims

1. Accumulator arrangement comprising a plurality of separate accumulator devices (3) for accumulating electrical energy, wherein each accumulator device (3) is received in a rod-shaped hollow profiled section (1) that forms a device housing, wherein said hollow profiled sections (1) are interconnected so as to form a solid composite,
**characterised in that**
in tshat the composite of hollow profiled sections (1) is enclosed in a frame (23), wherein at least two opposite struts of the frame (23) run parallel to the end faces of the enclosed hollow profiled sections (1).

2. Accumulator arrangement according to claim 1,
**characterised in that**
the rod-shaped hollow profiled sections (1) are produced as extruded profiled sections.

3. Accumulator arrangement according to any one of the preceding claims, **characterised in that**
the hollow profiled sections (1) are circular, triangular, quadrangular, hexagonal, C-shaped, or U-shaped in cross section.

4. Accumulator arrangement according to any one of the preceding claims, **characterised in that**
the hollow profiled sections (1) are connected to one another in a materially bonded manner and/or in an interlocking manner by lateral connection means.

5. Accumulator arrangement according to any one of the preceding claims, **characterised in that**
**in that** the hollow profiled sections (1) have at least one coolant channel (9) on their wall side.

6. Accumulator arrangement according to any one of the preceding claims, **characterised in that**
**in that** each accumulator device (3) is arranged on an insertable component (12), via which it can be inserted or is inserted into a hollow profiled section (1).

7. Accumulator arrangement according to claim 6,
**characterised in that**
**in that** the insertable component (12) has at least one end plate (18), which in the inserted state seals the hollow profiled section (1)

8. Accumulator arrangement according to claim 6 or 7,
**characterised in that**
**in that** the insertable components (12) are designed as carriages or as skids.

9. Accumulator arrangement according to any one of claims 6 to 8,
**characterised in that**
**in that** the accumulator devices (3) are electrically connected or can be electrically connected to one another via the insertable components (12).

10. Accumulator arrangement according to any one of claims 1 to 8,
**characterised in that**
**in that** the accumulator devices (3) are electrically connected or can be electrically connected to one another via separate connection means (16).

11. Accumulator arrangement according to any one of claims 1 to 8,
**characterised in that**
**in that** the accumulator devices (3) are electrically connected or can be electrically connected to one another via at least one contact rail (19), wherein the contact rail (19) covers at least one end side of a hollow profiled section (1).

## Revendications

1. Système de stockage comprenant plusieurs dispositifs de stockage séparés (3) pour stocker de l'énergie électrique, dans lequel chaque dispositif de stockage (3) est logé dans un profilé creux (1) en forme de tige et formant un boîtier de dispositif, dans lequel les profilés creux (1) sont reliés entre eux pour former un composite fixe,
**caractérisé en ce que**
le composite de profilés creux (1) est bordé dans un cadre (23), dans lequel au moins deux entretoises du cadre (23) se faisant face s'étendent parallèlement aux faces avant des profilés entourés (1).

2. Système de stockage selon la revendication 1,
**caractérisé en ce que**
les profilés creux en forme de tige (1) sont fabriqués en tant que profilés extrudés.

3. Système de stockage selon l'une des revendications précédentes,
**caractérisé en ce que**
les profilés creux (1) ont une forme circulaire, triangulaire, quadrangulaire, hexagonale, de C ou de U en section transversale.

4. Système de stockage selon l'une des revendications précédentes,
**caractérisé en ce que**
les profilés creux (1) sont reliés entre eux par complémentarité de matières et/ou par complémentarité de formes par des moyens de liaison latéraux.

5. Système de stockage selon l'une des revendications précédentes,
**caractérisé en ce que**
les profilés creux r1) présentent côté paroi au moins un canal d'agent réfrigérant (9).

6. Système de stockage selon l'une des revendications précédentes,
**caractérisé en ce que**
chaque dispositif de stockage (3) est disposé au niveau d'un composant emboîtable (12) via lequel il est insérable ou inséré dans un profilé creux (1).

7. Système de stockage selon la revendication 6,
**caractérisé en ce que**
le composant emboîtable (12) présente au moins une plaque avant (18) qui obture le profilé creux (1) à l'état emboîté.

8. Système de stockage selon la revendication 6 ou 7,
**caractérisé en ce que**
les composants emboîtables (12) sont réalisés en tant que fentes ou en tant que patins.

9. Système de stockage selon l'une des revendications 6 à 8,
**caractérisé en ce que**
les dispositifs de stockage (3) peuvent être reliés ou sont reliés électriquement entre eux via les composants emboîtables (12).

10. Système de stockage selon l'une des revendications 1 à 8,
**caractérisé en ce que**
les dispositifs de stockage (3) peuvent être reliés ou sont reliés électriquement entre eux via des moyens de liaison séparés (16).

11. Système de stockage selon l'une des revendications 1 à 8,
**caractérisé en ce que**
les dispositifs de stockage (3) peuvent être reliés ou sont reliés électriquement entre eux via au moins un rail de contact (19), dans lequel le rail de contact (19) recouvre au moins une face avant d'un profilé creux (1).
